# EUROPÄISCHE PATENTSCHRIFT

(11) **EP 0 795 436 B1**
(45) Veröffentlichungstag und Bekanntmachung des Hinweises auf die Patenterteilung: **29.06.2005**
(21) Anmeldenummer: 97104172.8
(22) Anmeldetag: 12.03.1997
(51) Int. Cl.: B60P 1/64, B65F 3/00

(54) **Fahrzeug, vorzugsweise Abfallsammelfahrzeug, mit als Wechselbehälter ausgebildeten Containern**
Vehicle, especially refuse collection vehicle, with a container in the form of an interchangeable collecting unit
Véhicule, en particulier véhicule de ramassage d'ordures, avec un conteneur sous la forme d'une benne interchangeable

(30) Priorität: 15.03.1996 DE 29604842 U
(43) Veröffentlichungstag der Anmeldung: 17.09.1997
(73) Patentinhaber: FAUN Umwelttechnik GmbH & Co., 90411 Nürnberg (DE)
(72) Erfinder: Hilmer, Günter, 86343 Königsbrunn (DE); Bayer, Günter, 86163 Augsburg (DE)
(74) Vertreter: Gossel, Hans K., Dipl.-Ing.

(56) Entgegenhaltungen:
- EP-A- 0 347 633
- DE-A- 1 530 574
- DE-A- 3 312 508
- DE-A- 4 013 267
- DE-A- 4 019 618
- GB-A- 2 047 662
- GB-A- 2 146 003

## Beschreibung

Die Erfindung betrifft ein Fahrzeug, vorzugsweise Abfallsammelfahrzeug, mit als Wechselbehälter ausgebildeten Containern, bestehend aus einem auf dem Fahrzeugrahmen gelagerten Kipprahmen, der durch eine Antriebseinrichtung um eine am hinteren Ende des Fahrzeugrahmens befindliche Querachse bis in eine vertikale Stellung schwenkbar ist, und aus einem auf dem Kipprahmen in Fahrzeuglängsrichtung verschieblich geführten und durch eine Antriebseinrichtung verfahrbaren Schlitten, der mit einer lösbaren Kupplungseinrichtung zum Ankuppeln des Containers versehen ist.

Aus den EP 0 264 925 und 0 347 633 sind Fahrzeuge dieser Art bekannt, die die Container hochkant auf deren in den Transportstellungen rückwärtigen Seiten stehend absetzen und diese auch aus diesen hochkant stehenden oder senkrechten Stellungen wieder aufnehmen. Es besteht jedoch das Bedürfnis, die Container in eine waagerechte Stellung absetzen zu können, in der sie sich auch auf den Transportfahrzeugen befinden, und aus diesen Stellungen wieder aufzunehmen. Ein derartiges Absetzen und Aufnehmen ist auch deshalb wünschenswert, weil es Fahrzeuge mit Absetz- und Aufnahmeeinrichtungen gibt, die die Container waagerecht auf dem Boden absetzen und aus dieser Stellung auch wieder aufnehmen. Derartige Fahrzeuge sind beispielsweise als Abrollkipper, Multilift- und Kettengeräte bekannt.

Aus DE 15 30 574, US 43 52 625, DE 94 18 472 U1 und EP 0 188 280 A2 sind Fahrzeuge mit Kipprahmen bekannt, mit denen sich Container waagerecht auf den Boden absetzen und aus dieser Stellung auch wieder aufnehmen lassen, wobei die DE-1530574 die Merkmale des Oberbegriffs von Anspruch 1 offenbart.

Um die Kompatibilität von Fahrzeugen der eingangs angegebenen Art mit Fahrzeugen zu gewährleisten, die Container waagerecht auf dem Boden liegend absetzen und aus dieser Lage auch wieder aufnehmen können, ist es Aufgabe der Erfindung, ein Fahrzeug der eingangs angegebenen Art zu schaffen, mit dem sich in einfacher Weise Container sowohl senkrecht stehend als auch waagerecht liegend absetzen und aus diesen Stellungen auch wieder aufnehmen lassen.

Erfindungsgemäß wird diese Aufgabe bei einem Fahrzeug der eingangs angegebenen Art dadurch gelöst, daß der an seinem hinteren Ende mit Kupplungseinrichtungen versehene Schlitten bis in den Bereich des hinteren Endes des Kipprahmens verfahrbar ist und daß der Container an seinem unteren vorderen Ende und in seinem unteren mittleren Bereich mit gegen Kupplungseinrichtungen versehen ist.

Zur Aufnahme eines waagerecht auf dem Boden liegenden Containers wird der Kipprahmen in eine nahezu senkrechte Stellung verschwenkt und das Fahrzeug rückwärts bis dicht an die Vorderseite des Containers herangefahren. Der Schlitten wird an das hintere Ende des Kipprahmens und zweckmäßigerweise über dieses hinaus verfahren, so daß sich die Kupplungseinrichtung nahe am Boden und in Höhe der Gegenkupplungseinrichtungen des Containers befinden. Durch entsprechende Steuerung des Schlittens und Verschwenken des Kipprahmens und, falls zur genaueren Ausrichtung noch erforderlich, durch Verfahren des Fahrzeugs werden die Kupplungs- und Gegenkupplungseinrichtungen miteinander in kuppelnden Eingriff gebracht. Dabei sind die Kupplungseinrichtungen so ausgebildet, daß sie ein Verschwenken des Schlittens um eine horizontale Querachse relativ zum Container zulassen. Nach der Ankupplung des Containers wird der Kipprahmen in Richtung auf den Fahrzeugrahmen verschwenkt, und zwar bis in eine Winkelstellung, in der der Kipprahmen im wesentlichen mit dem Boden des angekuppelten Containers fluchtet. Aus dieser Stellung wird sodann der Schlitten in Richtung des Fahrerhauses des Fahrzeugs verfahren, wobei der Container auf den Kipprahmen gezogen wird. Die Schwenkstellung des Kipprahmens kann dabei der jeweiligen Winkellage des Behälters angepaßt werden. Ist der Container bis über seinen Schwerpunkt auf den Kipprahmen gezogen worden, wird dieser in seine auf dem Fahrzeugrahmen liegende Stellung verschwenkt und der Container weiter bis in seine vordere Stellung verfahren, in der er verriegelt wird. Um den Container bis in seine vordere Stellung auf dem Fahrzeug verschieben zu können, wird der mit den vorderen Gegenkupplungseinrichtung gekuppelte Schlitten gelöst und so weit nach hinten verfahren, daß der mit den mittleren unteren Bereich des Containers befindlichen Gegenkupplungseinrichtungen gekuppelt werden kann. Nach der erneuten Ankupplung kann der Container sodann in seine vordere Stellung geschoben werden.

Soll der Container hochkant auf seiner rückwärtigen Seite stehend abgesetzt werden oder aus dieser Stellung wieder aufgenommen werden, wird der Kipprahmen in eine senkrechte Stellung verschwenkt. Zum Absetzen sind die Kupplungseinrichtungen des Schlittens mit den im mittleren Bereich des Containers befindlichen Gegenkupplungseinrichtungen gekuppelt, so daß dieser über den Schlitten abgesenkt werden kann, bis er hochkant auf dem Boden steht. Kupplungseinrichtungen werden sodann gelöst. Zum Aufnehmen des senkrecht stehenden Containers wird das Fahrzeug mit in eine senkrechte Stellung verschwenkten Kipprahmen derart an diesen herangefahren, daß die Kupplungseinrichtungen des Schlittens wieder mit dem des im mittleren Bereich befindlichen Gegenkupplungseinrichtungen gekuppelt werden können. Der Container wird sodann soweit angehoben, daß er über den Kipprahmen verschwenkt werden kann.

Handelt es sich bei dem erfindungsgemäßen Fahrzeug um ein Abfallsammelfahrzeug, wird der Container mit der Preßeinrichtung verriegelt. Bei dem Abfallsammelfahrzeug kann es sich vorzugsweise auch um ein solches mit einer seitlichen Schüttung bzw. einem Seitenlifter handeln.

Der Absetzvorgang für den Container vollzieht sich in entsprechend umgekehrter Weise.

Das erfindungsgemäße Fahrzeug ermöglicht es, unter Vermeidung eines Unfallrisikos Container in eine waagerechte Stellung abzusetzen und aus dieser auch wieder aufzunehmen. Weiterhin ist es auch möglich, mit der erfindungsgemäßen Absetz- und Aufnahmeeinrichtung Container auch senkrecht stehend abzusetzen und senkrecht stehende Container wieder aufzunehmen.

Vorzugsweise besteht die Kupplungseinrichtung aus quer zur Längsmittelebene des Fahrzeugs gegensinnig aus- und einfahrbaren Bolzen und die Gegenkupplungseinrichtung aus Aufnahmetaschen, die an den Innenseiten der seitlichen Bodenträger der Container vorgesehen sind. Um ein einfaches Ankuppeln ohne genaue Ausrichtung der Kupplungs- und Gegenkupplungseinrichtungen zueinander zu ermöglichen, greifen die Bolzen zweckmäßigerweise mit Spiel in die unter einem vorderen Querträger im Bodenbereich des Containers angeordneten Aufnahmetaschen, wobei zu den Bolzen konzentrische, schlittenfeste Stützsegmente vorgesehen sind, auf die sich der Querträger abstützen kann. Zum Kuppeln der Kupplungseinrichtungen müssen die Bolzen nur in etwa zu den Aufnahmetaschen ausgerichtet werden, da das Spiel so groß bemessen werden kann, daß diese auch bei nur ungefährer Ausrichtung bei ihrem Ausfahren in die Aufnahmetaschen eingreifen. Beim Anheben des Containers durch das Absenken des Kipprahmens wird sodann der Container nicht über die Bolzen, sondern über die schlittenfesten Stützsegmente angehoben, wobei sich der Querträger auf den Stützsegmenten bei dem Verschwenken des Kipprahmens abstützen kann, da diese eine zu dem Bolzen konzentrische Stützfläche aufweisen.

Um ein einfaches Kuppeln zu ermöglichen, überragen die Bolzen zweckmäßigerweise die Oberkante des Kipprahmens.

In weiterer Ausgestaltung der Erfindung ist vorgesehen, daß im vorderen und hinteren Bereich des Kipprahmens an diesem paarweise seitliche Gleitsteine oder Gleitrollen für die seitlichen Bodenträger des Containers vorgesehen und die vorderen Rollen derart angeordnet sind, daß sie beim Überfahren des Containers dessen vorderen Querträger von den Stützsegmenten abheben. Durch dieses Freiheben läßt sich der Schlitten wieder von dem Container entkuppeln und auch ohne den Container verfahren.

Die den Schlitten verfahrende Antriebseinrichtung besteht zweckmäßigerweise aus einer hydraulischen Kolben-Zylinder-Einheit. Diese kann sich jedoch in ihrem völlig eingefahrenen oder völlig ausgefahrenen Zustand in einer Stellung befinden, in der beim Aufnehmen des Containers dieser noch nicht seine vordere Endstellung auf dem Fahrzeugrahmen eingenommen hat. In weiterer Ausgestaltung der Erfindung ist daher vorgesehen, daß die seitlichen Bodenträger zwischen den vorderen Aufnahmetaschen und ihren hinteren Enden und weiteren einander gegenüberliegenden Aufnahmetaschen oder Gegenkupplungseinrichtungen versehen sind, so daß der Container durch erneutes Ankuppeln über die Grenzstellung des Antriebs beim Ankuppeln an die erste Gegenkupplungseinrichtung hinaus verschoben werden kann.

Ein Ausführungsbeispiel der Erfindung wird nachstehend anhand der Zeichnung näher erläutert. In dieser zeigt
- Fig. 1: ein Abfallsammelfahrzeug mit seitlicher Schüttung und einem Kipprahmen mit auf diesem verschieblich geführten Schlitten, der sich in seiner Stellung zur Aufnahme eines waagerecht auf dem Boden stehenden Containers befindet,
- Fig. 2: einen Schnitt durch den Kipprahmen und den auf diesem längsverschieblich geführten Schlitten,
- Fig. 3: einen Längsschnitt durch den vorderen unteren Bereich des Bodens des Containers mit an diesen angesetzten und in der Aufnahmestellung befindlichen Schlitten,
- Fig. 4: eine Seitenansicht des Fahrzeugs nach Fig. 1 während des Absenkens des Kipprahmens und vor dem Aufziehen des Containers,
- Fig. 5: einen der Fig. 3 entsprechenden Längsschnitt durch den Containerboden nach dem Überfahren der vorderen seitlichen Stützrollen des Kipprahmens,
- Fig. 6: eine den Fig. 1 und 4 entsprechende Darstellung des Fahrzeugs während des Aufziehens des Containers,
- Fig. 7: eine der Fig. 1 entsprechende Darstellung, in der der Kipprahmen mit dem an diesen angekuppelten Container in die horizontale Lage verschwenkt,
- Fig. 8: eine der Fig. 7 entsprechende Darstellung, in der der Container vollständig aufgeschoben mit der Schüttung bzw. Preßeinrichtung verriegelt ist,
- Fig. 9: eine Darstellung des Fahrzeugs in einer Stellung, in der der Kipprahmen mit dem an diesen angekuppelten Container in eine senkrechte Stellung verschwenkt wird, um diesen hochkant stehend auf dem Boden absetzen zu können,
- Fig. 10: eine Darstellung des Fahrzeugs nach Fig. 9 einer Stellung, in der der Container hochkant stehend auf dem Boden abgesetzt worden ist, und
- Fig. 11: eine Seitenansicht des auf dem Kipprahmen verschieblich geführten Schlittens in zwei unterschiedlichen Stellungen.

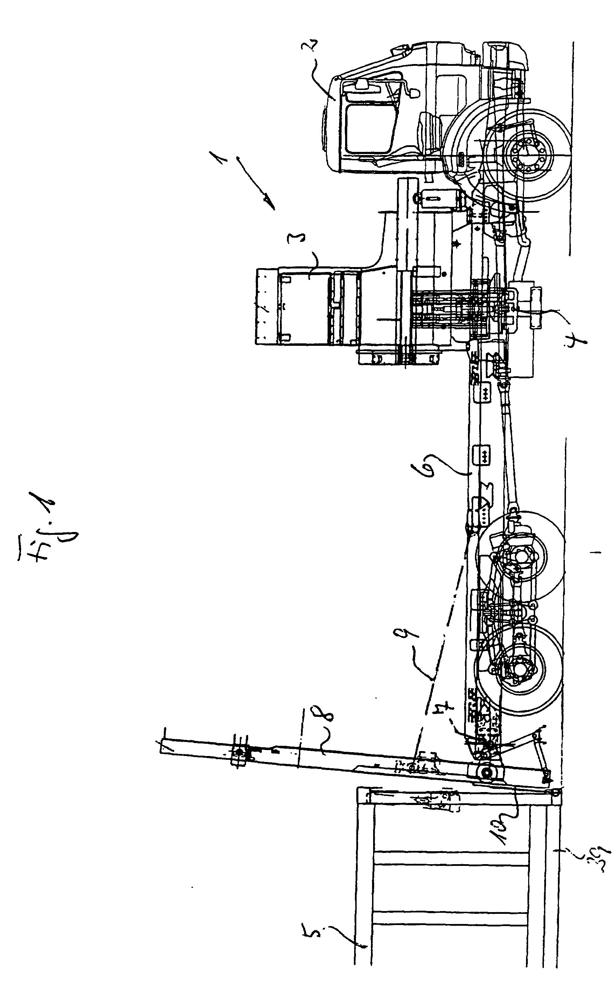

Aus Fig. 1 ist ein Abfallsammelfahrzeug 1 ersichtlich, das hinter dem Fahrerhaus 2 mit einer Schüttung 3 mit seitlicher Hub-Kipp-Einrichtung 4 und einer Preßeinrichtung zum Ausschieben des Abfalls aus der Schüttung und zum Verdichten in dem als Wechselbehälter ausgebildeten Container 5 versehen ist. Die Schüttung mit seitlicher Hub-Kipp-Vorrichtung und Preßeinrichtung ist bekannter Bauart und wird daher nicht näher beschrieben. An dem Fahrzeugrahmen 6 des Fahrgestells des Abfallsammelfahrzeugs ist um die am hinteren Ende befindliche Querachse 7 ein Kipprahmen 8 schwenkbar gelagert, der durch eine übliche hydraulische Kolben-Zylinder-Einheit, die durch die strichpunktierte Linie 9 angedeutet ist, zwischen seiner etwa senkrechten Stellung und seiner auf dem Fahrzeugrahmen liegenden Stellung verschwenkbar ist. In Führungen des Kipprahmens 8 ist ein Schlitten 10 verschieblich geführt.

Der Kipprahmen 8 besteht, wie aus Fig. 2 ersichtlich ist, aus seitlichen Rahmenholmen 11, 12 und diese miteinander verbindenden Traversen. Die seitlichen Rahmenholme 11, 12 sind mit oberen Winkelprofilen bzw. winkeligen Fortsätzen versehen, zwischen deren oberen waagerechten Schenkeln und den Oberseiten der Rahmenholme Führungen 13 für den Schlitten 10 gebildet sind. An seiner Unterseite ist der Schlitten 10 mit gegabelten Lagerstücken 14 versehen, zwischen denen das eine Ende einer teleskopierbaren hydraulischen Kolben-Zylinder-Einheit 15 angelenkt ist, deren anderes Ende gelenkig mit dem Rahmen 8 verbunden ist. Mit dem Schlitten 10 sind Stützsegmente 16 verschweißt, die mit Bohrungen für gegensinnig aus- und einfahrbare Bolzen 17, 18 versehen sind, die durch einen Hydraulikzylinder 19 ausfahrbar und einziehbar sind.

Die Rahmenholme 11, 12 sind in ihrem hinteren Bereich mit Stegblechen 20 verschweißt, die an ihren unteren Enden Achszapfen 21 tragen, die in dem Fahrzeugrahmen 6 schwenkbar gelagert sind und die querliegende Schwenkachse 7 des Kipprahmens 8 definieren.

Die seitlichen Rahmenholme 11, 12 sind mit seitlich auskragenden Zapfen 22 versehen, auf denen Stützrollen 23, 24 drehbar gelagert sind. Die Lage dieser Stützrollen ist beispielsweise aus Fig. 4 ersichtlich.

Der Container 5 ist in seinem Bodenbereich an seinem vorderen Ende mit einem Querträger 28 und mit seitlichen Bodenträgern 29, 30 versehen, die aus U-Profilen bestehen und den Boden des Containers nach unten hin überragen. An ihrem vorderen Ende sind die Bodenträger mit Aufnahmetaschen 31, 32 versehen, die durch diese abteilende Stege begrenzt sind. Die Aufnahmetaschen 31, 32 sind beträchtlich größer als die Durchmesser der Bolzen 17, 18, so daß diese auch bei nur ungefährer Ausrichtung nach ihrem Ausfahren in dieser Eingreifen können.

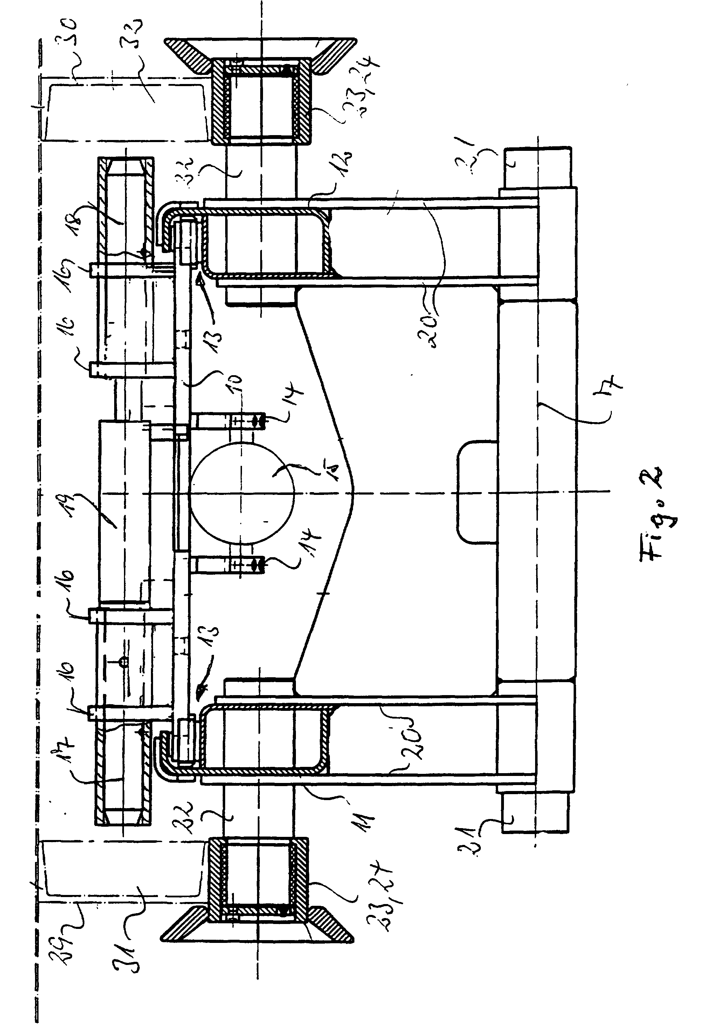

Die die Bolzenführungen enthaltenden Stützsegmente 16 sind in ihren oberen Bereichen konzentrisch zu der Mittellinie der Bolzen 17, 18 gekrümmt, so daß sich die Stützsegmente beim Kippen des Kipprahmens mit ihren kreisbogenförmigen oberen Stützflächen in der aus Fig. 3 ersichtlichen Weise auf der Unterseite des Querträgers 28 des Containers 5 abstützen.

Aus Fig. 1 ist die Stellung des Kipprahmens ersichtlich, in der dieser in seine nahezu senkrechte Stellung verfahren und der Schlitten mit den Bolzen über das hintere Ende des Kipprahmens 8 hinaus verfahren worden ist, so daß die Bolzen 17, 18 in der auch aus Fig. 3 ersichtlichen Stellung zum Eingriff in die Aufnahmetaschen 31, 32 ausgefahren werden können. Die Feinjustierung zum Ausrichten der Kupplungsteile kann durch Verschwenken des Kipprahmens 8 und Verfahren des Schlittens 10 vorgenommen werden.

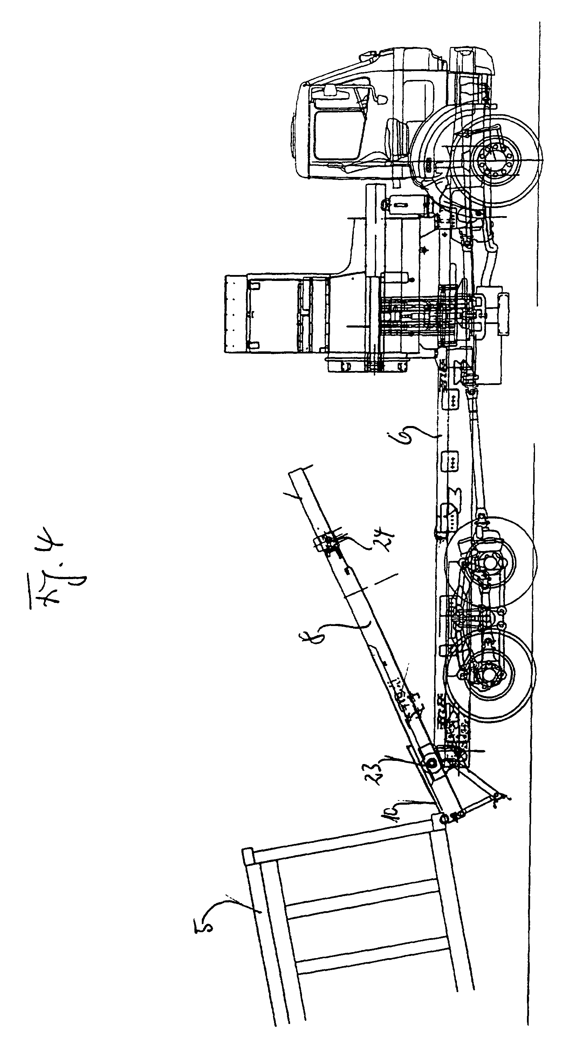

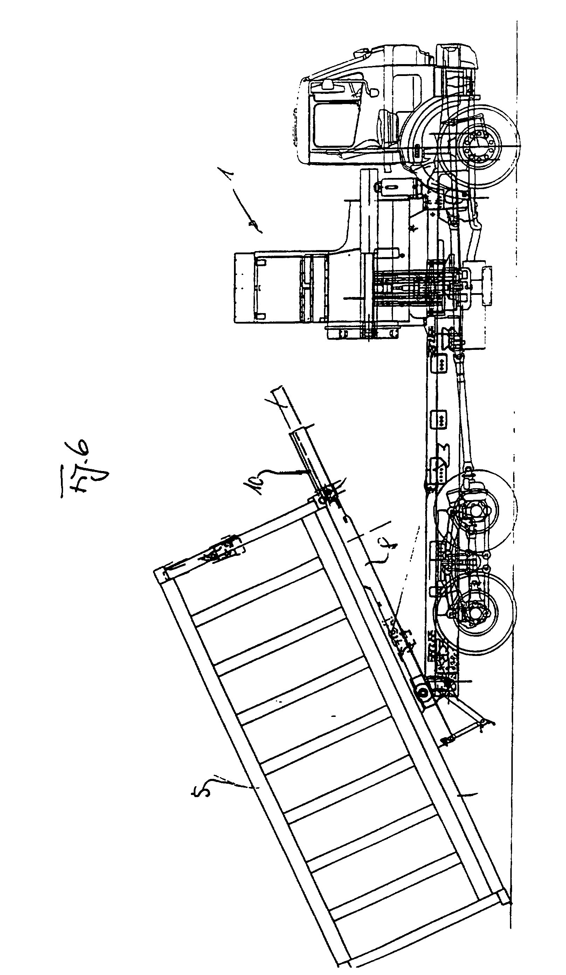

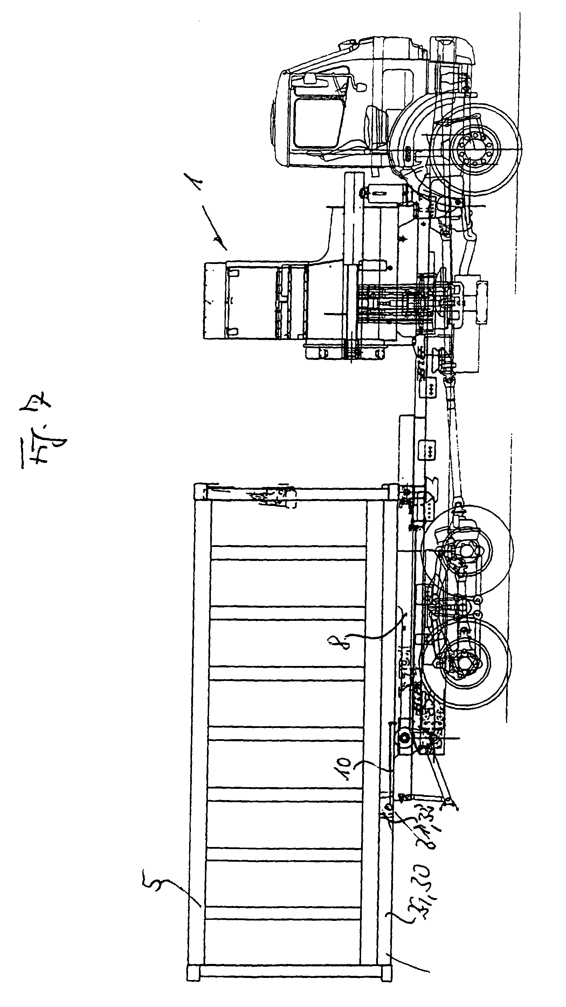

Nach dem Ankuppeln des Containers 5 in der aus Fig. 1 ersichtlichen Stellung an den Schlitten 10 wird der Kipprahmen 8 in der aus Fig. 4 ersichtlichen Stellung in Richtung auf den Fahrzeugrahmen 6 verschwenkt. Hierdurch wird der Container 5 in eine Schräglage angehoben. Sobald der Boden des Containers 5 im wesentlichen mit dem Kipprahmen 8 fluchtet, wird der Schlitten 10 in der aus Fig. 6 ersichtlichen Weise in Richtung auf das Fahrerhaus 2 unter Aufzug des Containers auf den Kipprahmen 8 verfahren. Sobald der Container 5 weit genug auf den Kipprahmen 8 gezogen worden ist, wird dieser in der aus Fig. 7 ersichtlichen Weise weiter in Richtung auf den Fahrzeugrahmen verschwenkt, bis dieser parallel auf dem Fahrzeugrahmen aufliegt. Anschließend wird der Container 5 bis an die Schüttung 3 heran verfahren und mit dieser verriegelt.

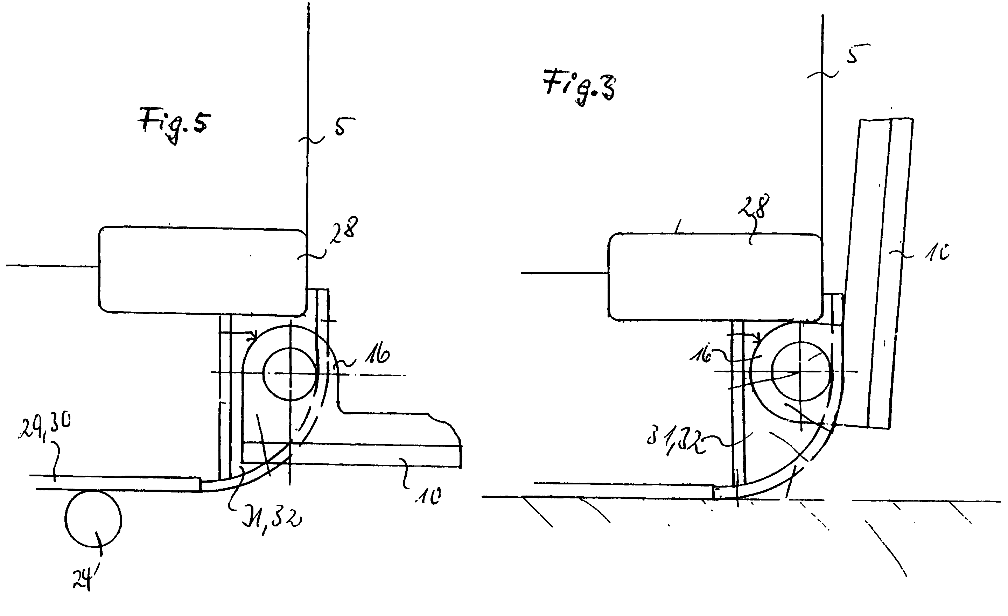

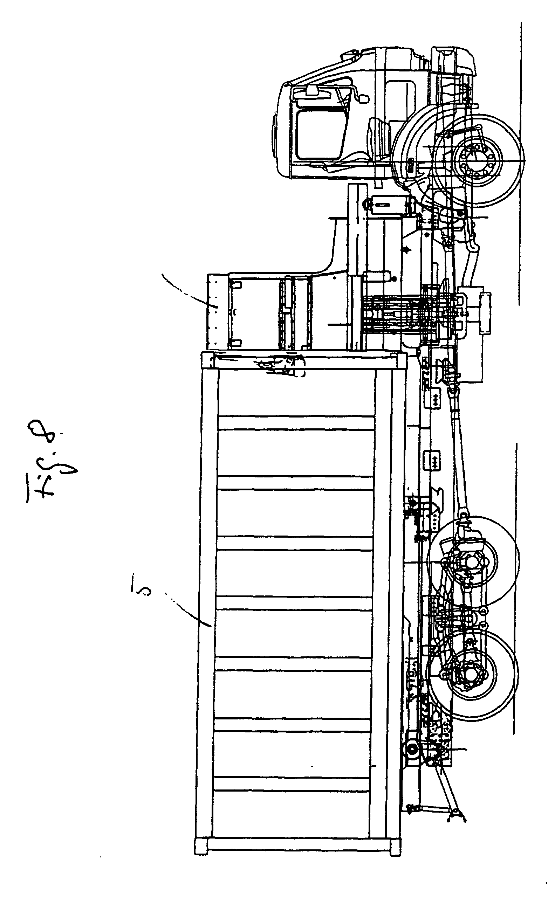

Sobald der Container die vorderen Rollen 24 des Stützrahmens überfahren hat, wird er in der auf Fig. 5 ersichtlichen Weise von den Stützsegmenten 16 abgehoben, so daß der Schlitten nach dem Einfahren der Bolzen 17, 18 von dem Container 5 gelöst ist. Der Schlitten 10 kann sodann beispielsweise zum Zwecke des Nachschiebens erneut nach hinten verfahren werden, um mit seinen Kupplungseinrichtungen erneut mit den Aufnahmetaschen 31', 32' gekuppelt zu werden, die sich im mittleren Bereich des Containers 5 befinden, so daß der Container nur dann in seine aus Fig. 8 ersichtliche Endposition verschoben werden kann.

Das Abschieben und Absetzen des Containers erfolgt in entsprechend umgekehrter Weise.

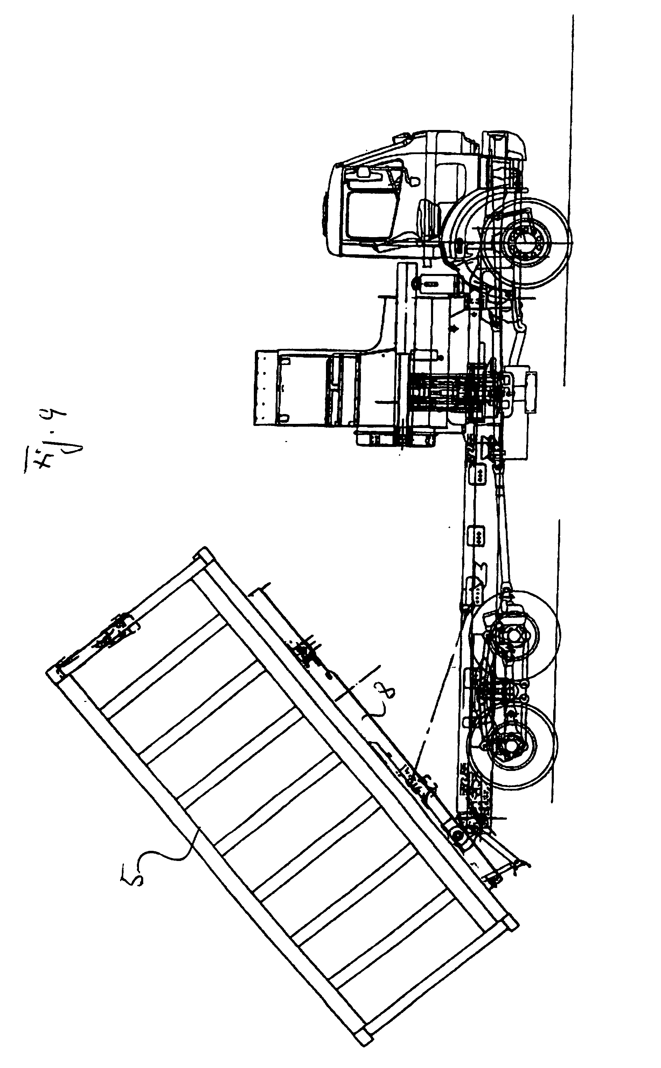

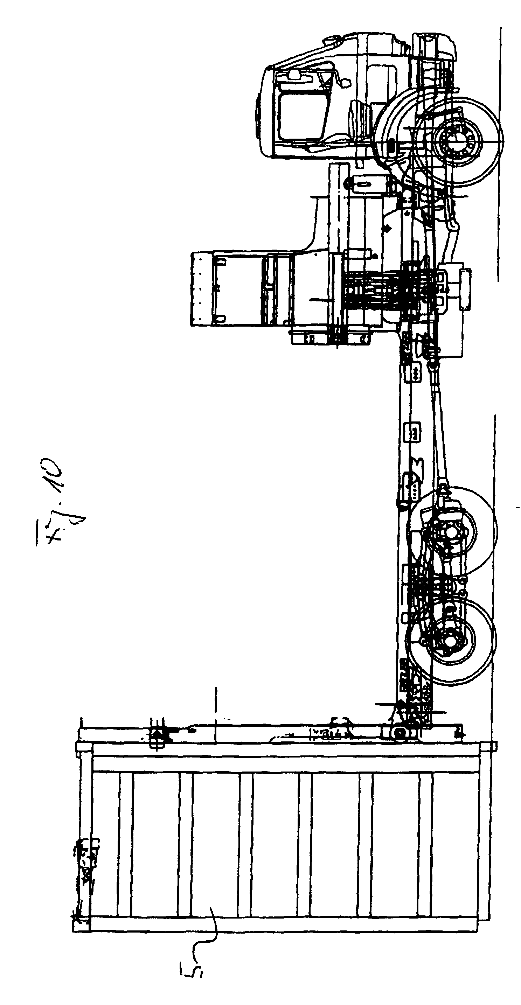

Das hochkant stehende Absetzen eines Containers 5 auf dem Boden ist aus den Fig. 9 und 10 ersichtlich.

In der aus Fig. 9 ersichtlichen Stellung sind die Kupplungseinrichtungen des Schlittens 10 mit den im mittleren Bereich des Containers 5 befindlichen Aufnahmetaschen 31', 32' gekuppelt. Der Kipprahmen 8 wird aus der aus Fig. 9 ersichtlichen Stellung bis in eine senkrechte Stellung verschwenkt, so daß der Container dann in der aus Fig. 10 ersichtlichen Weise hochkant stehend auf dem Boden abgesetzt werden kann. die Kupplungseinrichtungen werden sodann gelöst, so daß das Fahrzeug abgefahren werden kann. Das erneute Aufnehmen des Containers 5 geschieht in entsprechend umgekehrter Weise.

Selbstverständlich wird der Container auf dem Kipprahmen über übliche Verriegelungseinrichtungen zusätzlich gesichert, sobald er in seine Transportstellung verfahren worden ist.

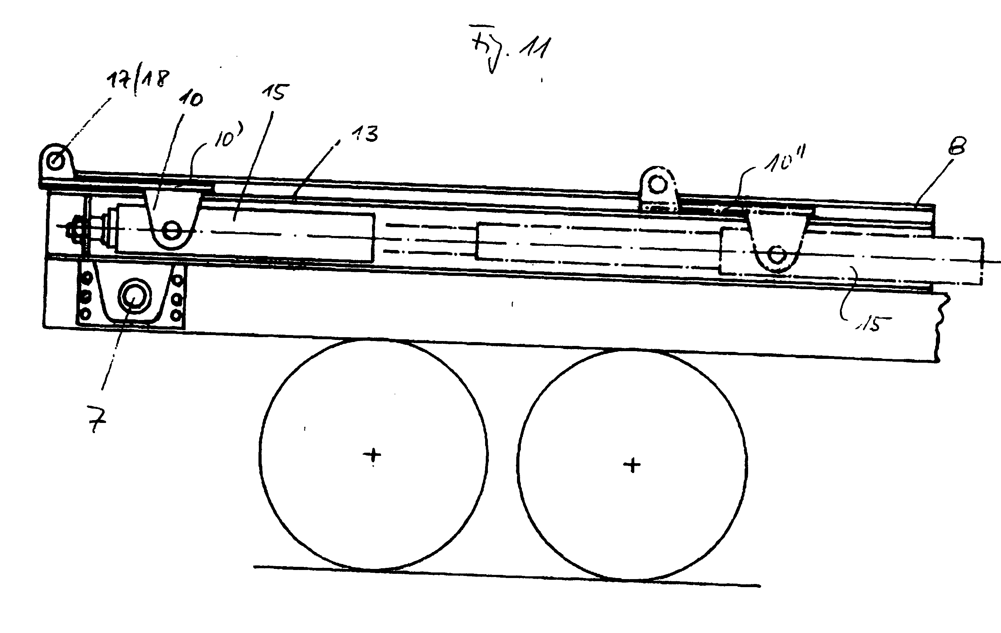

Wie aus Fig. 11 ersichtlich ist, wird der Schlitten 10 durch eine Kolben-Zylinder-Einheit 15, bei der es sich um eine teleskopierbare Zylinder-Einheit handelt, aus- und eingefahren. Die innere Kolbenstange der teleskopierbaren Zylindereinheit ist an einer Quertraverse des Kipprahmens an dessen hinteren Endbereich befestigt. Der Schlitten 10 ist, wie am besten aus Fig. 2 ersichtlich, mit gegabelten Lagestücken 14 versehen, die den äußeren Zylinder 15 einfassen und über Zapfen mit diesem gelenkig verbunden sind.

Aus Fig. 11 ist der Schlitten 10 in seiner an das hintere Ende des Kipprahmens verfahrenen Stellung 10' und in einer nach vorn verfahrenen Stellung 10'' ersichtlich.

## Patentansprüche

1. Fahrzeug, vorzugsweise Abfallsammelfahrzeug (1), mit als Wechselbehälter ausgebildeten Containern (5), bestehend
aus einem auf dem Fahrzeugrahmen (6) gelagerten Kipprahmen (8), der durch eine Antriebseinrichtung (9) um eine am hinteren Ende des Fahrzeugrahmens (6) befindliche Querachse (7) bis in eine vertikale Stellung schwenkbar ist, und
aus einem auf dem Kipprahmen (8) in Fahrzeuglängsrichtung verschieblich geführten und durch eine Antriebseinrichtung (15) verfahrbaren Schlitten (10), der mit einer lösbaren Kupplungseinrichtung zum Ankuppeln des Containers (5) versehen ist,
**dadurch gekennzeichnet,**
**daß** der an seinem hinteren Ende mit Kupplungseinrichtungen (17, 18) versehene Schlitten (10) bis in den Bereich des hinteren Endes des Kipprahmens (8) verfahrbar ist und daß der Container (5) an seinem unteren vorderen Ende und in seinem unteren mittleren Bereich mit Gegenkupplungseinrichtungen (31, 32; 31', 32') versehen ist, die mit den Kupplungseinrichtungen (17,18) des Schlittens (10) kuppelbar sind.

2. Fahrzeug nach Anspruch 1, **dadurch gekennzeichnet, daß** die Kupplungseinrichtung aus quer zur Längsmittelebene des Fahrzeugs gegensinnig aus- und einfahrbaren Bolzen (17, 18) und die Gegenkupplungseinrichtung aus Aufnahmetaschen (31, 32) besteht, die an den Innenseiten der seitlichen Bodenträger (29, 30) der Container (5) vorgesehen sind.

3. Fahrzeug nach einem der Ansprüche 1 oder 2, **dadurch gekennzeichnet, daß** die Bolzen (17, 18) mit Spiel in die unter einem vorderen Querträger (28) im Bodenbereich des Containers (5) angeordneten Aufnahmetaschen (31, 32) greifen und daß zu den Bolzen (17, 18) konzentrische, schlittenfeste Stützsegmente (16) vorgesehen sind, auf die sich der Querträger (28) abstützen kann.

4. Fahrzeug nach einem der Ansprüche 1 bis 3, **dadurch gekennzeichnet, daß** die Bolzen (17, 18) die Oberkante des Kipprahmens (8) überragen.

5. Fahrzeug nach einem der Ansprüche 1 bis 4, **dadurch gekennzeichnet, daß** im vorderen und hinteren Bereich des Kipprahmens (8) an diesem paarweise seitliche Gleitsteine oder -rollen (23, 24) für die seitlichen Bodenträger (29, 30) des Containers (5) vorgesehen und die vorderen Rollen (24) derart angeordnet sind, daß sie beim Überfahren des Containers (5) dessen vorderen Querträger (28) von den Stützsegmenten (16) abheben.

6. Fahrzeug nach einem der Ansprüche 1 bis 5, **dadurch gekennzeichnet, daß** die seitlichen Bodenträger der Container zwischen den vorderen Aufnahmetaschen und ihren hinteren Enden mit weiteren einander gegenüberliegenen Aufnahmetaschen oder Gegenkupplungseinrichtungen versehen sind, so daß der Container durch erneutes Ankuppeln an den Schlitten über die Grenzstellung des Antriebs beim Ankuppeln des Schlittens an die erste Gegenkupplungseinrichtung hinaus verschoben werden kann.

## Claims

1. Vehicle, preferably a refuse collection vehicle (1), with containers (5) in the form of interchangeable containers, comprising
a tilting frame (8) which is mounted on the vehicle frame (6) and which can be pivoted by a drive device (9) around a transverse axle (7) located at the rear end of the vehicle frame (6) into a vertical position, and
a carriage (10) which is guided displaceably on the tilting frame (8) in the longitudinal direction of the vehicle, can be driven by a drive device (15) and is provided with a releasable coupling device for coupling of the container (5),
**characterized in that**
the carriage (10) provided with coupling devices (17, 18) at its rear end can be driven as far as the area of the rear end of the tilting frame (8), and **in that** the container (5) is provided, at its lower front end and in its lower central area, with mating coupling devices (31, 32; 31', 32') which can be coupled to the coupling devices (17, 18) of the carriage (10).

2. Vehicle according to Claim 1, **characterized in that** the coupling device comprises bolts (17, 18) which can be moved out and retracted in opposite directions transversely with respect to the longitudinal central plane of the vehicle, and the mating coupling device comprises receiving pockets (31, 32) provided on the inner faces of the lateral base supports (29, 30) of the containers (5).

3. Vehicle according to either of Claims 1 and 2, **characterized in that** the bolts (17, 18) engage with play in the receiving pockets (31, 32) arranged under a front transverse support (28) in the base area of the container (5), and **in that** the bolts (17, 18) are assigned concentric bearing segments (16) which are fixed on the carriage and on which the transverse support (28) can bear.

4. Vehicle according to one of Claims 1 to 3, **characterized in that** the bolts (17, 18) protrude above the upper edge of the tilting frame (8).

5. Vehicle according to one of Claims 1 to 4, **characterized in that** pairs of lateral sliding blocks or rollers (23, 24) for the lateral base supports (29, 30) of the container (5) are provided in the front area and rear area of the tilting frame (8), and the front rollers (24) are arranged in such a way that, as the container (5) moves across, they lift its front transverse support (28) off from the bearing segments (16).

6. Vehicle according to one of Claims 1 to 5, **characterized in that** the lateral base supports of the containers are provided, between the front receiving pockets and their rear ends, with further receiving pockets or mating coupling devices lying opposite one another, so that the container, by renewed coupling to the carriage, can be moved past the limit position of the drive upon coupling of the carriage to the first mating coupling device.

## Revendications

1. Véhicule, en particulier de ramassage d'ordures (1), avec des conteneurs (5) réalisés sous forme de benne interchangeable, constituée
d'un châssis basculant (8) logé sur le châssis de véhicule (6) qui peut être amené à pivoter par une installation d'entraînement (9) autour d'un axe transversal (7) se trouvant à l'extrêmité arrière du châssis de véhicule (6) jusque dans une position verticale, et
d'un chariot (10) guidé d'une manière déplaçable sur le châssis basculant (8) dans la direction longitudinale du véhicule et déplaçable par une installation d'entraînement (15), qui est pourvu d'une installation de couplage relâchable pour le couplage du conteneur (5),
**caractérisé en ce que**
le chariot (10) pourvu à son extrémité arrière d'installations de couplage (17, 18) est déplaçable jusque dans la zone de l'extrêmité arrière du châssis basculant (8), et **en ce que** le conteneur (5) présente à son extrêmité inférieure avant et à sa zone inférieure médiane des installations de contre-couplage (31,32:31',32') qui peuvent être couplées avec les installations de couplage (17,18) du chariot (10).

2. Véhicule selon la revendication 1, **caractérisé en ce que** l'installation de couplage est constituée de boulons (17,18) pouvant être sortis et rentrés transversalement à l'axe médian longitudinal du véhicule en sens opposé, et l'installation de contre-couplage de poches de réception (31,32) qui sont prévues aux côtés intérieurs des supports de fond latéraux (29,30) des conteneurs (5).

3. Véhicule selon l'une des revendications 1 ou 2, **caractérisé en ce que** les boulons (17,18) passent avec un jeu dans les poches de réception (31,32) disposées sous un support transversal avant (28) dans la zone de fond du conteneur (5), et **en ce que** sont prévus des segments d'appui (16) solidaires du chariot, concentriques aux boulons (17,18) sur lesquels peut s'appuyer, le support transversal (28).

4. Véhicule selon l'une des revendications 1 à 3, **caractérisé en ce que** les boulons (17, 18) font saillie sur l'arête supérieure du châssis basculant (8).

5. Véhicule selon l'une des revendications 1 à 4, **caractérisé en ce que** sont prévus dans la zone avant et arrière du châssis basculant (8), à celui-ci, par paires, des coulisseaux ou rouleaux de coulissement latéraux (23,24) pour les supports de fond latéraux (29,30) du conteneur (5), et que les rouleaux avant (24) sont disposés de façon que lors du passage sur le conteneur (5), ils relèvent son support transversal avant (28) des segments d'appui (16).

6. Véhicule selon l'une des revendications 1 à 5, **caractérisé en ce que** les supports de fond latéraux des conteneurs, entre les poches de réception avant et leurs extrémités arrière, sont pourvus d'autres poches de réception opposées les unes aux autres ou d'installations de contre-couplage de sorte que le conteneur, par un nouveau couplage au chariot, peut être poussé au-delà de la position limite de l'entraînement lors du couplage du chariot à la première installation de contre-couplage.
